# EUROPEAN PATENT APPLICATION

(11) **EP 4 625 853 A1**
(43) Date of publication of application: **01.10.2025**
(21) Application number: 23910304.7
(22) Date of filing: 20.12.2023
(51) Int. Cl.: H04J 3/16

(54) **STORAGE DEVICE, AND DATA COMMUNICATION METHOD AND SYSTEM**

(30) Priority: 27.12.2022 CN 202211691501
(71) Applicant: Huawei Technologies Co., Ltd., Shenzhen, Guangdong 518129 (CN)
(72) Inventor: CHEN, Yufang, Shenzhen, Guangdong 518129 (CN); LIU, Xiaoni, Shenzhen, Guangdong 518129 (CN); WU, Junhong, Shenzhen, Guangdong 518129 (CN)
(74) Representative: Pfenning, Meinig & Partner mbB
(86) International application number: PCT/CN2023/140344
(87) International publication number: WO 2024/140375

(57) **Abstract**

A storage device, a data communication method, and a system are disclosed, and relate to the field of optical communication technologies. A network adapter in the storage device implements OTN encapsulation of data, so that an OTN frame to which the data is mapped can be generated without transmission and encapsulation of the data through a plurality of devices. This reduces transmission latency of the data from a memory to an optical transceiver, and improves data communication efficiency. In addition, because the data does not need to be processed through an Ethernet switch, a protocol stack used by the storage device to encapsulate the data into the OTN frame does not need to use an Ethernet protocol. This simplifies an encapsulation procedure required for generating the OTN frame, reduces an amount of data included in the OTN frame, and helps further improve the data communication efficiency.

## Description

This application claims priority to Chinese Patent Application No. 202211691501.X, filed with China National Intellectual Property Administration on December 27, 2022 and entitled "STORAGE DEVICE, DATA COMMUNICATION METHOD, AND SYSTEM", which is incorporated herein by reference in its entirety.

### TECHNICAL FIELD

This application relates to the field of optical communication technologies, and in particular, to a storage device, a data communication method, and a system.

### BACKGROUND

In a data communication network (Data Communication Network, DCN), an optical transport network (Optical Transport Network, OTN) has become a mainstream technology used by a transport network due to features such as high bandwidth, a large capacity, high reliability, and low latency, and is widely used in a backbone network, a metropolitan area network, a core network, an aggregation network, and the like. An OTN frame is used to carry various types of service data and provides various management and monitoring functions.

Currently, a remote direct memory access (Remote Direct Memory Access, RDMA) application is deployed in a server. The RDMA application invokes an Ethernet network adapter in a storage device to read service data in the storage device. The Ethernet network adapter encapsulates the service data and sends the encapsulated data to an Ethernet switch. The Ethernet switch forwards the encapsulated data to an OTN device. The OTN device adds an OTN frame header to the encapsulated data to generate an OTN frame, and sends the OTN frame to another device in an OTN. It can be learned that the OTN frame can be determined only after the service data is transmitted and encapsulated for a plurality of times. When a data amount of the service data is large, communication efficiency between end-to-end devices in the OTN is low.

### SUMMARY

This application provides a storage device, a data communication method, and a system, to resolve a problem that an OTN frame can be determined only after service data is transmitted and encapsulated through different devices for a plurality of times, so as to improve communication efficiency between end-to-end devices in an OTN.

According to a first aspect, an embodiment of this application provides a storage device. The storage device includes a processor, a memory, and a network adapter. The network adapter includes a data processing chip, a storage medium, and an optical transceiver. The memory is configured to store to-be-sent data written by the processor. The data processing chip is configured to write the to-be-sent data from the memory into the storage medium. The data processing chip is further configured to: read the to-be-sent data in the storage medium, and map the to-be-sent data to a payload area of an OTN frame generated by the data processing chip. The optical transceiver is configured to send the OTN frame.

In this embodiment, the network adapter in the storage device completes OTN encapsulation of data, so that an OTN frame to which the data is mapped can be generated without transmission and encapsulation of the data through a plurality of devices. This reduces transmission latency of the data from the memory to the optical transceiver, and improves data communication efficiency. In addition, because the data does not need to be processed through an Ethernet switch, a protocol stack used by the storage device to encapsulate the data into the OTN frame does not need to use an Ethernet (Ethernet, ETH) protocol. This simplifies an encapsulation procedure required for generating the OTN frame, reduces an amount of data included in the OTN frame, and helps further improve the data communication efficiency.

For example, because the network adapter may directly encapsulate data into an OTN frame without performing Ethernet encapsulation, and the network adapter can be inserted into an end-side storage device, the storage device may directly output the OTN frame on an end side without forwarding through an Ethernet switch. This implements a hard pipe transmission capability from an end-side device to another end-side device in an optical communication network, avoids a packet loss in a data communication process, and improves data communication efficiency.

In an optional example, the optical transceiver is further configured to receive a data write response of a target storage device. The data write response indicates that the to-be-sent data has been written into the target storage device.

For example, after the optical transceiver receives the data write response of the target storage device, the storage device determines that current data transmission ends. This avoids resource consumption caused by a case in which the storage device reserves a hardware resource (for example, a computing resource or a storage resource) for the current data transmission, and helps the storage device use a limited hardware resource to perform another service.

In some possible cases, the optical transceiver may be further configured to: receive an OTN frame sent by another optical network device in the optical communication network, and store data obtained by parsing the OTN frame.

In an optional implementation, the memory is further configured to maintain at least one remote direct memory access (remote direct memory access, RDMA) send queue. The at least one RDMA send queue includes a first send queue. The first send queue stores a work queue element (work queue element, WQE) of one or more pieces of data. The one or more pieces of data include the to-be-sent data. The optical transceiver is further configured to provide a plurality of OTN channels, where one OTN channel is used to transmit data corresponding to one RDMA send queue. The data processing chip is further configured to: read a WQE of the to-be-sent data from the first send queue, and establish a mapping relationship between the WQE and a first OTN channel in the plurality of OTN channels. The mapping relationship indicates that the to-be-sent data can be transmitted through the first OTN channel.

In this embodiment, a mapping relationship between an RDMA queue in the storage device and the OTN channel provided by the optical transceiver may be established, so that data of different RDMA queues is transmitted through different OTN channels. The mapping relationship is established by the network adapter based on a WQE of data recorded in the RDMA queue. This prevents the optical transceiver from sending an OTN frame corresponding to the data to an OTN channel that does not match the WQE of the data, and improves data communication accuracy. In addition, in a subsequent communication process of other data, if the network adapter has established a mapping relationship between a WQE of the other data and the first OTN channel, the network adapter may reuse the mapping relationship, to transmit, through the first OTN channel, an OTN frame to which the other data is mapped. This further improves data communication efficiency in the optical communication network.

In another optional implementation, the data processing chip includes a first chip and a second chip. The first chip is configured to read the WQE of the to-be-sent data from the first send queue. The first chip is further configured to write the to-be-sent data from the memory into the storage medium based on a source address indicated by the WQE. The second chip is configured to establish the mapping relationship between the WQE and the first OTN channel in the plurality of OTN channels. The second chip is further configured to: read the to-be-sent data in the storage medium, and map the to-be-sent data to a payload area of an OTN frame generated by the second chip.

In a feasible example, the first chip may be a data processing unit (data processing unit, DPU), and the second chip may be an optical chip (also referred to as an optical processing chip, an OTN chip, or the like) configured to perform packet processing on an optical line side.

Optionally, that the first chip is configured to read the WQE in the RDMA send queue, and read data from the memory may include: The first chip writes the to-be-sent data from the memory into storage space corresponding to a first queue in a plurality of queues based on the source address indicated by the WQE. The plurality of queues herein are maintained by the storage medium included in the network adapter. That the second chip is configured to establish the mapping relationship between the WQE of the data and the OTN channel may include: The second chip establishes the mapping relationship between the first queue and the first OTN channel.

In this embodiment, different chips in the network adapter are configured to implement different functions. The first chip implements interaction between the network adapter and an application layer. The second chip implements interaction between the network adapter and the optical communication network. Therefore, hard pipe transmission of data from the memory to the optical communication network can be implemented through coordination between the different chips in the network adapter. This helps improve data communication efficiency.

Optionally, the second chip is specifically configured to map the to-be-sent data to a plurality of optical service unit (Optical Service Unit, OSU) frames. The to-be-sent data is carried in payload areas of the plurality of OSU frames. The second chip is further specifically configured to map the plurality of OSU frames to the OTN frame.

In this embodiment, the second chip may map data to payload areas of different OSU frames, so that data communication can be performed on the to-be-sent data at a finer slot granularity. In addition, a requirement for lossless adjustment and an OTN communication incompatibility problem are considered from the beginning in an OSU technology, so that a communication process of the to-be-sent data can support a larger lossless bandwidth adjustment range. This helps improve data communication efficiency. The lossless bandwidth adjustment herein includes at least one of a bandwidth increase, a bandwidth decrease, and a bandwidth rollback. The bandwidth rollback indicates an operation of restoring to an original state after a problem occurs.

Optionally, the second chip is further configured to determine whether a data flow rate of the first queue is greater than or equal to a specified rate threshold. The data flow rate is an amount of data written by the first chip into the first queue in unit time. If the data flow rate is greater than or equal to the specified rate threshold, the second chip is further configured to indicate the first chip to reduce a data flow rate of writing data into the first queue.

In this embodiment, when an expected data processing speed of the second chip is excessively high, for example, a data flow rate of the second chip is greater than or equal to a specified rate threshold, the second chip may indicate the first chip to reduce the data flow rate of writing the data into the first queue, so that an amount of data to be processed (for example, encapsulated) by the second chip in the unit time is reduced, to reduce communication load of the second chip. This helps avoid a network packet loss of the second chip, and improves communication performance of the optical communication network.

Optionally, the processor is configured to obtain a data access request. The data access request is used to request the to-be-sent data. The processor is further configured to determine that a data amount of the to-be-sent data is greater than or equal to a specified threshold. The data processing chip is specifically configured to write the to-be-sent data from the memory into the storage medium if the data amount of the to-be-sent data is greater than or equal to the specified threshold.

In this embodiment, the data processing chip writes the to-be-sent data from the memory in the storage device into the storage medium in the network adapter only when the processor determines that the data amount of the to-be-sent data is greater than or equal to the specified threshold. In other words, in an application scenario of transmission of a large amount of data, the network adapter encapsulates the to-be-sent data, and transmits the OTN frame through the optical transceiver. This reduces communication latency caused by a plurality of times of transmission and Ethernet encapsulation of the data, and helps improve data communication efficiency in a scenario of communication of a large amount of data.

According to a second aspect, an embodiment of this application provides a data communication method. The data communication method is performed by a storage device. The storage device includes a processor, a memory, and a network adapter. The memory is configured to store to-be-sent data written by the processor. The network adapter includes a data processing chip, a storage medium, and an optical transceiver. The data communication method provided in this embodiment includes: First, the data processing chip writes the to-be-sent data from the memory into the storage medium. Then, the data processing chip reads the to-be-sent data in the storage medium, and maps the to-be-sent data to a payload area of an OTN frame generated by the data processing chip. Finally, the optical transceiver sends the OTN frame.

Optionally, the memory is further configured to maintain at least one RDMA send queue. The at least one RDMA send queue includes a first send queue. The first send queue stores a work queue element WQE of one or more pieces of data. The one or more pieces of data include the to-be-sent data. The optical transceiver is configured to provide a plurality of OTN channels, where one OTN channel is used to transmit data corresponding to one RDMA send queue. That the data processing chip reads the to-be-sent data in the storage medium includes: The data processing chip reads a WQE of the to-be-sent data from the first send queue, and writes the to-be-sent data from the memory into the storage medium based on a source address indicated by the WQE. In addition, before that the optical transceiver sends the OTN frame, the data communication method provided in this embodiment further includes: The data processing chip establishes a mapping relationship between the WQE and a first OTN channel in the plurality of OTN channels. The mapping relationship indicates that the to-be-sent data can be transmitted through the first OTN channel.

Optionally, the data processing chip includes a first chip and a second chip. That the data processing chip reads a WQE of the to-be-sent data from the first send queue, and writes the to-be-sent data from the memory into the storage medium based on a source address indicated by the WQE includes: The first chip reads the WQE of the to-be-sent data from the first send queue, and writes the to-be-sent data from the memory into the storage medium based on the source address indicated by the WQE. That the data processing chip establishes a mapping relationship between the WQE and a first OTN channel in the plurality of OTN channels includes: The second chip establishes the mapping relationship between the WQE and the first OTN channel in the plurality of OTN channels. That the data processing chip maps the to-be-sent data to the payload area of the OTN frame generated by the data processing chip includes: The second chip reads the to-be-sent data in the storage medium, and maps the to-be-sent data to a payload area of an OTN frame generated by the second chip.

Optionally, the storage medium maintains a plurality of queues. The plurality of queues include a first queue. Storage space corresponding to the first queue is used to store the to-be-sent data. That the second chip establishes the mapping relationship between the WQE and the first OTN channel in the plurality of OTN channels includes: The second chip establishes the mapping relationship between the first queue and the first OTN channel.

Optionally, the data communication method provided in this embodiment further includes: The second chip determines whether a data flow rate of the first queue is greater than or equal to a specified rate threshold. The data flow rate is an amount of data written by the first chip into the first queue in unit time. If the data flow rate is greater than or equal to the specified rate threshold, the second chip indicates the first chip to reduce a data flow rate of writing data into the first queue.

Optionally, that the data processing chip maps the to-be-sent data to the payload area of the optical transport network OTN frame generated by the data processing chip includes: First, the second chip maps the to-be-sent data to a plurality of OSU frames. The to-be-sent data is carried in payload areas of the plurality of OSU frames. Second, the second chip maps the plurality of OSU frames to the OTN frame.

Optionally, before that the data processing chip writes the to-be-sent data from the memory into the storage medium, the data communication method provided in this embodiment further includes: The processor obtains a data access request. The data access request is used to request the to-be-sent data. The processor determines that a data amount of the to-be-sent data is greater than or equal to a specified threshold. The data processing chip writes the to-be-sent data from the memory into the storage medium if the data amount of the to-be-sent data is greater than or equal to the specified threshold.

Optionally, the data communication method provided in this embodiment further includes: The optical transceiver receives a data write response of a target storage device. The data write response indicates that the to-be-sent data has been written into the target storage device.

According to a third aspect, an embodiment of this application provides an optical communication system. The optical communication system includes a storage device and an optical network device. The storage device includes a processor, a memory, and a network adapter. The network adapter includes a data processing chip, a storage medium, and an optical transceiver. The memory is configured to store to-be-sent data written by the processor. The data processing chip is configured to write the to-be-sent data from the memory into the storage medium. The data processing chip is further configured to: read the to-be-sent data in the storage medium, and map the to-be-sent data to a payload area of an OTN frame generated by the data processing chip. The optical transceiver is configured to send the OTN frame to the optical network device.

The optical communication system provided in this embodiment may be configured to implement a function of the storage device in any one of the manners of the first aspect, and can also achieve a corresponding beneficial effect. Details are not described herein again.

According to a fourth aspect, an embodiment of this application provides a computer-readable storage medium. The computer-readable storage medium includes computer software instructions. When the computer software instructions are run in a storage device, the storage device is enabled to perform the method provided in any one of the possible implementations of the second aspect.

According to a fifth aspect, an embodiment of this application provides a computer program product. When the computer program product runs in a storage device, the storage device is enabled to perform the method provided in any one of the possible implementations of the second aspect.

For beneficial effects of any one of the possible implementations of the second aspect to the fifth aspect, refer to the descriptions of any one of the first aspect and the possible implementations of the first aspect. Details are not described herein again. In this application, based on the implementations provided in the foregoing aspects, the implementations may be further combined to provide more implementations.

### BRIEF DESCRIPTION OF DRAWINGS

FIG. 1 is a schematic diagram of a structure of an optical communication system according to an embodiment of this application;
FIG. 2A is a first schematic diagram of a structure of a storage device according to an embodiment of this application;
FIG. 2B is a second schematic diagram of a structure of a storage device according to an embodiment of this application;
FIG. 3 is a first schematic flowchart of a data communication method according to an embodiment of this application;
FIG. 4 is a schematic diagram of a structure of a protocol stack according to an embodiment of this application; and
FIG. 5 is a second schematic flowchart of a data communication method according to an embodiment of this application.

### DESCRIPTION OF EMBODIMENTS

This application provides a storage device. The storage device includes a processor, a memory, and a network adapter. The network adapter includes a data processing chip, a storage medium, and an optical transceiver. The memory stores to-be-sent data written by the processor. The data processing chip writes the to-be-sent data from the memory into the storage medium. The data processing chip further reads the to-be-sent data in the storage medium, and maps the to-be-sent data to a payload area of an OTN frame generated by the data processing chip. The optical transceiver sends the OTN frame. In this embodiment, OTN encapsulation of data is adjusted from an end-side device in an OTN to the network adapter in the storage device, so that an OTN frame to which the data is mapped can be generated without transmission and encapsulation of the data through a plurality of devices. This reduces transmission latency of the data from the memory to the optical transceiver, and improves data communication efficiency. In addition, because the data does not need to be processed through an Ethernet switch, a protocol stack used by the storage device to encapsulate the data into the OTN frame does not need to use an Ethernet protocol. This simplifies an encapsulation procedure required for generating the OTN frame, reduces an amount of data included in the OTN frame, and helps further improve the data communication efficiency.

For example, because the network adapter may directly encapsulate data into an OTN frame without performing Ethernet encapsulation, and the network adapter can be inserted into an end-side storage device, the storage device may directly output the OTN frame on an end side without forwarding through an Ethernet switch. This implements a hard pipe transmission capability from an end-side device to another end-side device in an optical communication network, avoids a packet loss in a data communication process, and improves data communication efficiency.

For clear and brief description of the following embodiments, a conventional technology is briefly described first.

RDMA: Data is directly transferred to a storage area of a computer through a network, and the data is quickly migrated from a system to a remote system memory without causing any impact on an operating system. In this way, a processing function of the computer is not needed. This eliminates overheads of external memory replication and context switching, to free up internal memory bandwidth and a CPU cycle to improve application system performance.

An RDMA over converged Ethernet version 2 (RDMA over Converged Ethernet version 2, RoCEv2) protocol is a protocol based on a user datagram protocol (User Datagram Protocol, UDP). An InfiniBand (InfiniBand, IB) protocol packet is encapsulated in a UDP packet for transmission in the Ethernet. A storage device sends to-be-transmitted data to an Ethernet switch through a network adapter, and the data is aggregated and then transmitted through an OTN network.

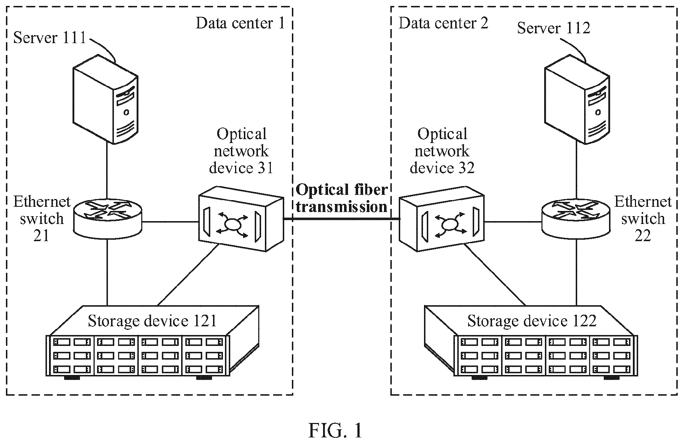

FIG. 1 is a schematic diagram of a structure of an optical communication system according to an embodiment of this application. The optical communication system includes a data center (data center, DC) 1 and a data center 2. The data center 2 and the data center 1 transmit data and implement communication through an optical fiber.

Different data centers may be deployed in a same city or different cities. The data center may include a server, an Ethernet switch, an optical network device, and a storage device. As shown in FIG. 1, the data center 1 includes a server 111, an Ethernet switch 21, an optical network device 31, and a storage device 121, and the data center 2 includes a server 112, an Ethernet switch 22, an optical network device 32, and a storage device 122.

The data center 1 is used as an example to describe hardware devices included in the data center. The Ethernet switch 21 may be a routing and forwarding device. For example, the routing and forwarding device may be a router, a switch, or the like. The optical network device 31 may be a device that transmits an optical signal through an optical transmission medium (such as an optical fiber) in the optical communication system. The server 111 may be an application server or an authentication and authorization server. The server 111 may provide a video service, a game service, a message service, a music service, an authentication and authorization service, and the like. In an example, functions of a plurality of services may be integrated into the server 111. For example, the game service and the music service may be deployed on the server 111. In another example, functions of some services may be integrated into the server 111. For example, a part of the game service and a part of the video service are deployed on the server 111. The server 111 may further use a virtualization technology to provide a plurality of virtual machines, and the virtual machines provide various services. A deployment form of the service is not limited in this embodiment of this application.

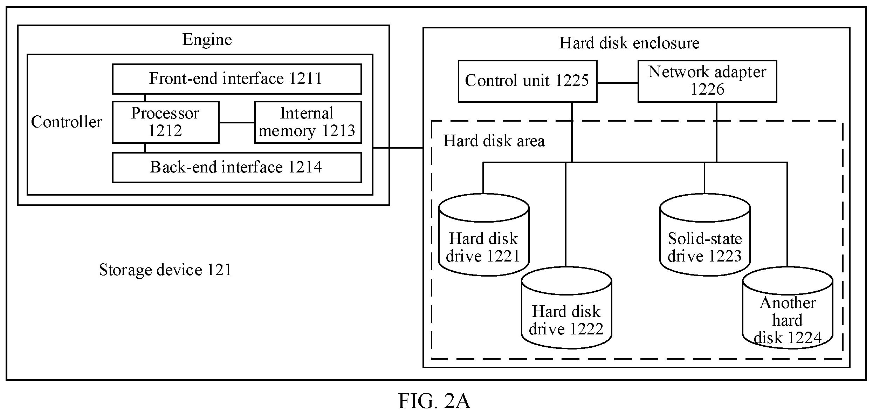

The storage device 121 may include devices such as a processor, a memory, and a network adapter. FIG. 2A is a first schematic diagram of a structure of a storage device according to an embodiment of this application. The storage device 121 shown in FIG. 2A may be a centralized storage system. The centralized storage system features a unified portal, and all data from an external device passes through this portal. This portal is an engine of the centralized storage system. The engine is a core component of the centralized storage system, and many advanced functions of the storage system are implemented in the engine.

The engine may include one or more controllers. An example in which the engine includes one controller is used for description in FIG. 2A. In a possible example, if the engine includes a plurality of controllers, a mirror channel may exist between any two controllers, to implement a function of mutual backup of any two controllers. This avoids unavailability of the entire storage device 121 caused by a hardware fault. It should be understood that if the engine includes a plurality of controllers, the engine may also be referred to as an array controller of the storage device 121.

The engine further includes a front-end interface 1211 and a back-end interface 1214. The front-end interface 1211 is configured to communicate with a computing device, to provide a data access service for the computing device. The back-end interface 1214 is configured to communicate with a hard disk, to expand a capacity of the storage device 121. The engine may connect to more hard disks through the back-end interface 1214, to form a very large storage resource pool.

In terms of hardware, as shown in FIG. 2A, the controller includes at least a processor 1212 and an internal memory 1213. The processor 1212 is a central processing unit (central processing unit, CPU), configured to process a data access request from outside the storage device 121 (the server or another storage system), and also configured to process a request generated inside the storage device 121. For example, when receiving, through the front-end interface 1211, data write requests sent by the computing device, the processor 1212 temporarily stores, in the internal memory 1213, data in the data write requests. When a total amount of data in the internal memory 1213 reaches a specific threshold, the processor 1212 sends the data stored in the internal memory 1213 to at least one of a hard disk drive 1221, a hard disk drive 1222, a solid-state drive (solid-state drive, SSD) 1223, or another hard disk 1224 through a back-end port, to perform persistent storage.

The internal memory 1213 is an internal memory that directly exchanges data with the processor. The internal memory 1213 can read and write the data at a high speed at any time, and serves as a temporary data memory of an operating system or another running program. The internal memory includes at least two types of memories. For example, the internal memory may be a random access memory, or may be a read-only memory (read-only memory, ROM). For example, the random access memory is a DRAM or an SCM. The DRAM is a semiconductor memory, and is a volatile memory (volatile memory) device like most random access memories (random access memories, RAMs). However, the DRAM and the SCM are merely examples for description in this embodiment. The internal memory may further include another random access memory, for example, a static random access memory (static random access memory, SRAM). For example, the read-only memory may be a programmable read-only memory (programmable read only-memory, PROM) or an erasable programmable read-only memory (erasable programmable read-only memory, EPROM).

In addition, the internal memory 1213 may alternatively be a dual in-line memory module (dual in-line memory module, DIMM), that is, a module including a dynamic random access memory (DRAM), or may be an SSD. During actual application, a plurality of internal memories 1213 and different types of internal memories 1213 may be disposed in the controller. A quantity and types of internal memories 1213 are not limited in this embodiment. In addition, the internal memory 1213 may be configured to have a power failure protection function. The power failure protection function means that data stored in the internal memory 1213 is not lost even when a system is powered on again after a power failure. An internal memory having the power failure protection function is referred to as a non-volatile memory.

The internal memory 1213 stores a software program, and the processor 1212 may run the software program in the internal memory 1213 to manage the hard disk. For example, the hard disk is abstracted into a storage resource pool, and the storage resource pool is provided in a form of a logical unit number (logical unit number, LUN) for the server to use. The LUN herein is actually the hard disk seen on the server. Certainly, some centralized storage systems are also file servers, and may provide a file sharing service for the server.

As shown in FIG. 2A, in the system, the engine may not have a hard disk slot, the hard disk needs to be placed in a hard disk enclosure, and the back-end interface 1214 communicates with the hard disk enclosure. The back-end interface 1214 exists in the engine in a form of an adapter. Two or more back-end interfaces 1214 may be simultaneously used on one engine to connect to a plurality of hard disk enclosures. Alternatively, the adapter may be integrated on a mainboard. In this case, the adapter may communicate with the processor 1212 through a peripheral component interconnect express (Peripheral Component Interconnect Express, PCIe) bus.

It should be noted that FIG. 2A shows only one engine. However, during actual application, the storage system may include two or more engines, and redundancy or load balancing is performed between the plurality of engines.

The hard disk enclosure includes a control unit 1225 and several hard disks. The control unit 1225 may have a plurality of forms. In one case, the hard disk enclosure is a smart disk enclosure. As shown in FIG. 2A, the control unit 1225 includes a CPU and an internal memory. The CPU is configured to perform operations such as address translation and data reading and writing. The internal memory is configured to temporarily store data that is to be written into the hard disk, or data this is read from the hard disk and that is to be sent to the controller. In another case, the control unit 1225 is a programmable electronic component, for example, a DPU. The DPU has versatility and programmability of the CPU, but is more specialized, and can run efficiently on a network data packet, a storage request, or an analysis request. The DPU is distinguished from the CPU by a high degree of parallelism (which requires processing a large quantity of requests). Optionally, the DPU herein may alternatively be replaced with a processing chip such as a graphics processing unit (graphics processing unit, GPU) or an embedded neural-network processing unit (neural-network processing unit, NPU). Generally, there may be one control unit 1225 or two or more control units 1225. A function of the control unit 1225 may be offloaded to a network adapter 1226. In other words, in this implementation, the hard disk enclosure does not have a control unit 1225 inside, but the network adapter 1226 completes data reading and writing, address translation, and another computing function. In this case, the network adapter 1226 is an intelligent network adapter. The intelligent network adapter may include a CPU and an internal memory. The CPU is configured to perform operations such as address translation and data reading and writing. The internal memory is configured to temporarily store data that is to be written into the hard disk, or data this is read from the hard disk and that is to be sent to the controller. The intelligent network adapter may alternatively be a programmable electronic component, for example, a DPU. The network adapter 1226 in the hard disk enclosure does not belong to the hard disk in the hard disk enclosure. The network adapter 1226 may access any hard disk (such as the hard disk drive 1221, the hard disk drive 1222, the solid-state drive 1223, and the another hard disk 1224 shown in FIG. 2A) in the hard disk enclosure. Therefore, hard disk expansion is convenient when storage space is insufficient.

Based on a type of a communication protocol between the engine and the hard disk enclosure, the hard disk enclosure may be a serial attached small computer system interface (serial attached small computer system interface, SAS) hard disk enclosure, may be an NVMe (Non-Volatile Memory express) hard disk enclosure, or may be another type of hard disk enclosure. The SAS hard disk enclosure uses an SAS 3.0 protocol. Each enclosure supports 25 SAS hard disks. The engine is connected to the hard disk enclosure through an onboard SAS interface or an SAS interface module. The NVMe hard disk enclosure is more like a complete computer system. An NVMe hard disk is inserted into the NVMe hard disk enclosure. The NVMe hard disk enclosure is then connected to the engine through an RDMA port.

In an optional implementation, the storage device 121 is a centralized storage system in which a disk and a controller are integrated. The storage device 121 does not have the foregoing hard disk enclosure. The engine is configured to manage a plurality of hard disks connected through a hard disk slot. A function of the hard disk slot may be implemented by the back-end interface 1214. For example, the storage device 121 may be a storage array, such as an all-flash storage array in which all storage media are flash memories.

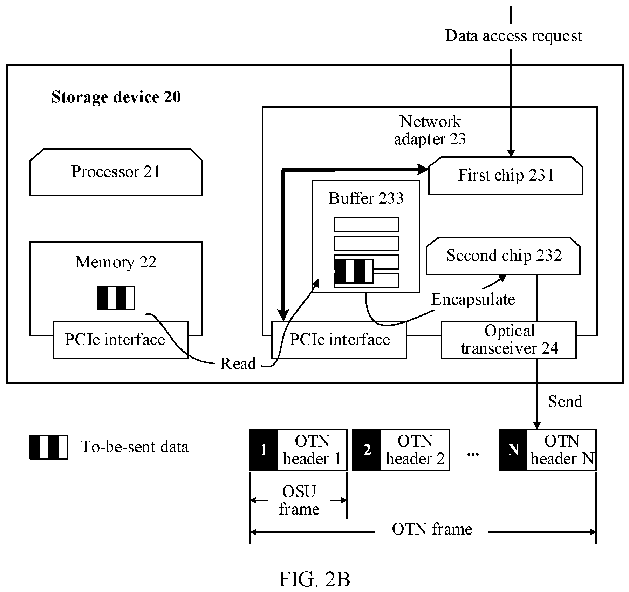

In a possible example, the network adapter 1226 may include a data processing chip, an optical transceiver, a storage medium, and the like. For the foregoing storage device 121, this example provides another implementation. FIG. 2B is a second schematic diagram of a structure of a storage device according to an embodiment of this application. The storage device 20 includes a processor 21, a memory 22, and a network adapter 23. The processor 21, the memory 22, and the network adapter 23 may be in a communication connection through a PCIe interface. Optionally, another type of interface or bus, or the like, for example, a universal serial bus (universal serial bus, USB), a compute express link (compute express link, CXL), or another type of bus or interface, may alternatively be used for a communication connection. This is not limited in this application.

For specific implementations of the processor 21 and the memory 22, refer to related descriptions in FIG. 2A. Details are not described again.

As shown in FIG. 2B, the network adapter 23 includes a first chip 231, a second chip 232, a buffer 233, and an optical transceiver 24.

For example, the first chip 231 may be a DPU or another processor having a data processing function. For example, the first chip 231 is configured to write data stored in the memory 22 into the buffer 233.

The second chip 232 may be a framing chip, and the second chip 232 is configured to map the data stored in the buffer 233 to a payload area of an OTN frame.

For example, the buffer 233 may be configured to temporarily store data read by the first chip 231, or may be configured to temporarily store data received by the optical transceiver 24. In a possible example, the buffer 233 may be a cache. In another possible example, the buffer 233 may alternatively be replaced with another type of storage medium, for example, a DRAM, an SCM, a hard disk drive, or an SSD.

For example, the optical transceiver 24 is configured to send an OTN frame to another optical network device in the optical communication system, and receive an OTN frame or another optical signal sent by the another optical network device.

In some possible examples, logic circuits included in the first chip 231 and the second chip 232 may be integrated into one printed circuit board (printed circuit board, PCB). Therefore, the first chip 231 and the second chip 232 may also be collectively referred to as a data processing chip, a data processing module, a data processing apparatus, a data processing unit, or the like. In subsequent embodiments of this application, functions of the first chip 231 and the second chip 232 are described in detail by using the data processing chip as an example.

It should be noted that FIG. 2A and FIG. 2B are merely possible implementations of the two storage devices provided in embodiments of this application. Devices included in the two storage devices may be exchanged, and names used in different figures are different, but all the devices can implement a function of the storage device provided in embodiments of this application, to implement an optical signal transmission function in the optical communication system. For example, the network adapter 23 may be configured to implement a function of the network adapter 1226, and the network adapter 1226 may also include chips and buffers included in the network adapter 23. This is not limited in this application.

The following describes a data communication method provided in embodiments of this application with reference to the storage device 20 provided in the foregoing embodiment.

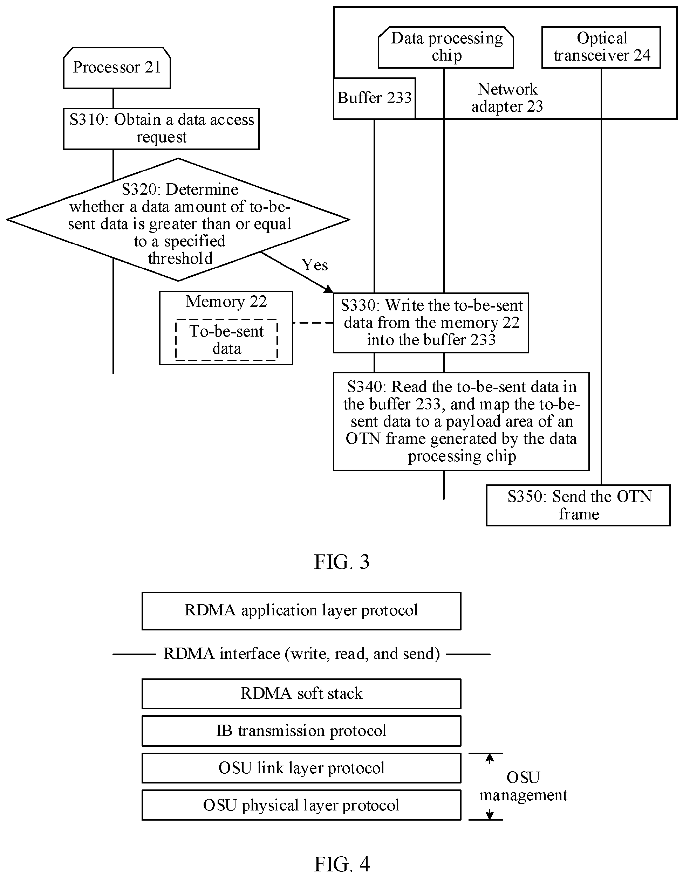

FIG. 3 is a first schematic flowchart of a data communication method according to an embodiment of this application. The data communication method may be applied to the optical communication system shown in FIG. 1. The data communication method is performed by the storage device 20. For a hardware implementation of the storage device 20, refer to related descriptions in FIG. 2B. Details are not described again. As shown in FIG. 3, the data communication method provided in this embodiment of this application includes the following steps S310 to S350.

S310: The processor 21 obtains a data access request.

The data access request is used to request to-be-sent data stored in the memory 22.

In a possible example, the data access request is generated by the processor 21 based on a service performed by the storage device 20.

In another possible example, the data access request is received by the processor 21 from another device. For example, the another device may be the server 111 shown in FIG. 1, or a client (a user) communicating with the server 111.

S320: The processor 21 determines whether a data amount of the to-be-sent data is greater than or equal to a specified threshold.

For example, the specified threshold is 100 million bytes (million bytes, MB), 500 MB, or another value.

If the data amount of the to-be-sent data is greater than or equal to the specified threshold, S330 continues to be performed.

For example, when initiating a data transmission task, an RDMA application identifies that the task is a long-distance transmission task of a large amount of data (transmission of 10 GB data for 1000 kilometers), and notifies the data processing chip to start long-distance data transmission.

S330: The data processing chip writes the to-be-sent data from the memory 22 into the buffer 233.

The data processing chip herein may include the first chip 231, the second chip 232, and the like shown in FIG. 2B.

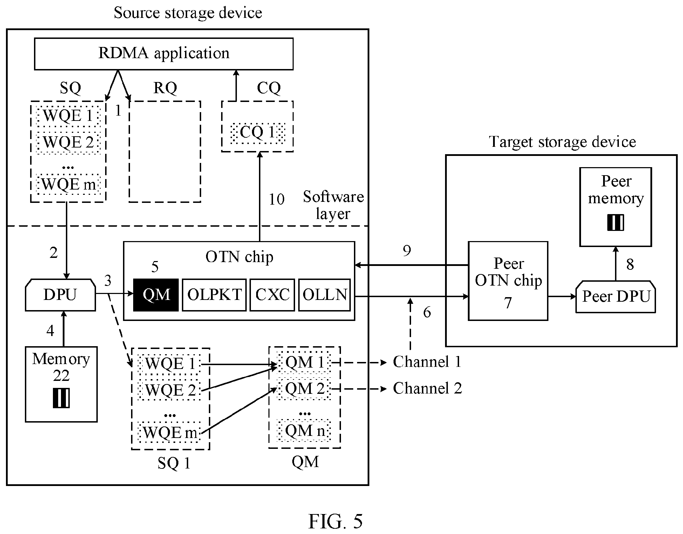

For example, the first chip 231 may write the to-be-sent data from the memory 22 into the buffer 233. For a specific implementation process in which the first chip writes the data from the memory into the buffer, refer to the following related descriptions in FIG. 5. Details are not described herein.

S340: The data processing chip reads the to-be-sent data in the buffer 233, and maps the to-be-sent data to a payload area of an OTN frame generated by the data processing chip.

For example, the second chip 232 maps the to-be-sent data to a plurality of OSU frames, where the to-be-sent data is carried in payload areas of the plurality of OSU frames; and the second chip 232 maps the plurality of OSU frames to the OTN frame.

In this embodiment, the second chip may map data to payload areas of different OSU frames, so that data communication can be performed on the to-be-sent data at a finer slot granularity. In addition, a requirement for lossless adjustment and an OTN communication incompatibility problem are considered from the beginning in an OSU technology, so that a communication process of the to-be-sent data can support a larger lossless bandwidth adjustment range. This helps improve data communication efficiency.

The lossless bandwidth adjustment herein includes at least one of a bandwidth increase, a bandwidth decrease, and a bandwidth rollback. The bandwidth rollback indicates an operation of restoring to an original state after a problem occurs. For more content about the OSU technology, refer to descriptions of a common technology. Details are not described herein again.

S350: The optical transceiver 24 sends the OTN frame generated in S340.

In this embodiment, the network adapter in the storage device implements an OTN encapsulation function of data, so that an OTN frame to which the data is mapped can be generated without transmission and encapsulation of the data through a plurality of devices. This reduces transmission latency of the data from the memory to the optical transceiver, and improves data communication efficiency.

In addition, because the data does not need to be processed through an Ethernet switch, a protocol stack used by the storage device to encapsulate the data into the OTN frame does not need to use an Ethernet protocol. This simplifies an encapsulation procedure required for generating the OTN frame, reduces an amount of data included in the OTN frame, and helps further improve the data communication efficiency.

For example, because the network adapter may directly encapsulate data into an OTN frame without performing Ethernet encapsulation, and the network adapter can be inserted into an end-side storage device, the storage device may directly output the OTN frame on an end side without forwarding through an Ethernet switch. This implements a hard pipe transmission capability from an end-side device to another end-side device in an optical communication network, avoids a packet loss in a data communication process, and improves data communication efficiency.

Beneficial effects of embodiments of this application are described with reference to an implementation of the protocol stack. In the common technology, data needs to pass through a memory, a network adapter, a switch, and an optical network device, and a protocol stack used in a process of encapsulating the data into an OTN frame includes content shown in Table 1 below.

**Table 1**

| | Data and check number | | IB protocol | Ethernet transmission protocol | | | Optical transmission protocol |
|---|---|---|---|---|---|---|---|
| Format | FCS | IB payload | IB BTH | UDP header | IP header | ETH header | OTN header |

The frame check sequence (Frame Check Sequence, FCS) is a tail field of a protocol data unit (frame) at a data link layer of a computer network, and is a 4-byte cyclic redundancy check code. In some examples, the FCS is also referred to as a frame trailer.

The IB payload is used to carry message payloads such as RDMA messages or data.

The IB BTH is a base transport header (InfiniBand base transport header, IB BTH) provided by the IB protocol. The IB BTH field indicates a destination QP (destination QP), an operation code (operation code), a packet sequence number (packet sequence number, PSN), and a partition (partition). An operation code field (OpCode field) in the BTH field determines a start and an end of a SEND message.

A user datagram protocol (user datagram protocol, UDP) field indicates that a payload of a packet is an RDMA message. An internet protocol (internet protocol, IP) field is used for layer 3 forwarding through a switch. An ETH header field indicates an additional field or the like in an Ethernet transmission process. An OTN header field indicates a frame header for processing an optical signal in an optical transport network process.

In contrast, in the data communication method provided in embodiments of this application, data needs to pass through the memory, the network adapter, and the optical network device, and a protocol stack used in a process of encapsulating the data into an OTN frame includes content shown in Table 2 below.

**Table 2**

| | Data and check number | | IB protocol | Optical transmission protocol |
|---|---|---|---|---|
| Format | FCS | IB payload | IB BTH | OTN header |

It can be learned that in the protocol stack, a transport layer IB protocol is directly carried on a physical layer OSU protocol to implement a simplified protocol stack. During transmission application, the storage device directly outputs an OTN signal (OTN frame) to interconnect with the optical network device (or an optical transport device), to implement end-to-end hard pipe transmission from an end side to a network side. In some optional examples, the simplified protocol stack may also be referred to as RDMA over OSU. Communication efficiency of long-distance transmission between different DCs is greatly improved based on advantages of an OTN such as zero packet losses, low latency, and a long transmission distance.

It can be learned by comparing the OTN frame formats in Table 1 and Table 2 that the OTN frame formats use different protocol stacks. FIG. 4 is a schematic diagram of a structure of a protocol stack according to an embodiment of this application. In the technical solutions provided in this application, protocol stacks used by the OTN frame include: an RDMA application layer protocol (RDMA application protocol), an IB transmission protocol, an OSU link layer protocol (OSU link layer protocol), and an OSU physical layer (OSU physical layer protocol, OSU PHY layer) protocol. In this embodiment, an RDMA application layer is directly carried in a physical layer frame format (the OTN frame). For example, the RDMA application layer is directly used as a service layer of the OSU and encapsulated into a payload of an OSU. The RDMA and the OSU interconnect and cooperate with each other to complete an entire service encapsulation and decapsulation process.

In some optional implementations, if the data amount of the to-be-sent data is less than the specified threshold, the storage device may indicate to still use, for a transmission task of a small amount of data between different DCs, a switch transmission path, for example, the storage device 121-the network adapter included in the storage device 121-the Ethernet switch 21-the optical network device 31 shown in FIG. 1.

For long-distance batch transmission of a large amount of data, an OTN network adapter of the storage device is directly interconnected with an OTN transmission device for transmission, and the storage device may directly output the OTN frame on the end side without forwarding through an Ethernet switch. This implements a hard pipe transmission capability from an end-side device to another end-side device in an optical communication network, avoids a packet loss in a data communication process, and improves data communication efficiency.

In some other optional implementations, after the optical transceiver 24 sends the OTN frame generated in S340, the optical transceiver 24 may further receive a data write response of a target storage device. The data write response indicates that the to-be-sent data has been written into the target storage device.

For example, the target storage device may be the storage device 122 in FIG. 1. In some feasible examples, the data write response may be an OTN frame generated and sent by a network adapter included in the storage device 122.

In this embodiment, after the optical transceiver receives the data write response of the target storage device, the storage device determines that current data transmission ends. This avoids resource consumption caused by a case in which the storage device reserves a hardware resource (for example, a computing resource or a storage resource) for the current data transmission, and helps the storage device use a limited hardware resource to perform another service.

For the implementation processes of S330 and S340, an embodiment of this application provides a possible implementation. FIG. 5 is a second schematic flowchart of a data communication method according to an embodiment of this application. A network adapter usually receives and sends data by using a message queue. The message queue includes a group of queue pairs (queue pairs, QPs), and the QP includes a send queue and a receive queue. For example, a message queue used to send data in the network adapter 23 is a send queue (SQ), and a message queue used to receive data in the network adapter 23 is a receive queue (RQ). The message queue is a connection manner used for communication between a plurality of hosts (or storage devices). For example, a plurality of connections may be established between the plurality of hosts by using a TCP/IP protocol. Each connection has a receive queue and a send queue, and the receive queue and the send queue are used to transmit data of the connection.

For example, the memory 22 maintains one or more RDMA send queues (send queues, SQs). The one or more SQs may include an SQ 1 to an SQ N, and each SQ stores WQEs of a plurality of pieces of data. For example, the WQE includes a source address and a destination address of the data, an internal memory address for storing the data, an identifier of a destination storage device, transmission completion duration, or a data amount. For more content about the WQE, refer to related descriptions in the common technology. Details are not described herein. Correspondingly, the memory 22 further maintains an RDMA receive queue (receive queue, RQ). The RQ is used to receive a data message.

This embodiment is described by using the SQ 1 as an example. The SQ 1 may also be referred to as a first send queue. The SQ 1 stores a WQE of one or more pieces of data, and the one or more pieces of data include the to-be-sent data.

As shown in FIG. 5, the optical transceiver 24 is further configured to provide a plurality of OTN channels (for example, a channel 1 and a channel 2 in FIG. 5), where one OTN channel is used to transmit data corresponding to one SQ. For example, the channel 1 is used to transmit data corresponding to a WQE 1 and a WQE 2 in the SQ 1.

In this embodiment of this application, an example in which the first chip 231 is a DPU and the second chip 232 is an OTN chip is used for description. The data communication method provided in this embodiment includes the following step 1 to step 10.

Step 1: An RDMA application initiates a data transmission task, and records, in an SQ, a WQE of data corresponding to the data transmission task, for example, a WQE 1 to a WQE m in FIG. 5.

Step 2: A DPU (the first chip 231) reads, from the SQ 1, the WQE of the to-be-sent data, and writes the to-be-sent data from the memory 22 into the buffer 233 based on a source address indicated by the WQE.

For example, the RDMA application notifies the DPU of WQE information to be currently transmitted, such as a data amount, expected transmission completion duration, an internal memory address for storing data, or a destination address.

Step 3: The data processing chip establishes a mapping relationship between the WQE of the to-be-sent data and a first OTN channel in the plurality of OTN channels.

For example, the WQE of the to-be-sent data may be, for example, the WQE 1 shown in FIG. 5, and the first OTN channel may be, for example, the channel 1 shown in FIG. 5. The mapping relationship indicates that the to-be-sent data can be transmitted through the first OTN channel (channel 1).

In a possible case, an OTN chip included in the data processing chip is associated with an RDMA QP queue. After the QP queue is generated (for example, the SQ 1), the OTN chip allocates, to the SQ 1, a corresponding OTN channel that carries data.

Step 4: The DPU writes the to-be-sent data from the memory 22 into a buffer of the network adapter.

For example, the buffer 233 in the network adapter maintains a plurality of queues, the plurality of queues include a first queue (QM 1), and storage space corresponding to the first queue is used to store the to-be-sent data. In a process in which the OTN chip establishes the mapping relationship between the SQ and the OTN channel, the OTN chip establishes a mapping relationship between the QM 1 and the channel 1. If the data corresponding to the WQE 1 and the WQE 2 is transmitted through the channel 1 corresponding to the QM 1, data corresponding to the WQE m is transmitted through the channel 2 corresponding to a QM 2.

In this embodiment, different chips in the network adapter are configured to implement different functions. The DPU implements interaction between the network adapter and an application layer. The OTN chip implements interaction between the network adapter and the optical communication network. Therefore, hard pipe transmission of data from the memory to an optical communication network can be implemented through coordination between the different chips in the network adapter. This helps improve data communication efficiency.

Step 5: The OTN chip reads the to-be-sent data in the buffer, and maps the to-be-sent data to a payload area of an OTN frame generated by the OTN chip.

As shown in FIG. 5, the OTN chip includes a plurality of modules: a queue management (queue management, QM) unit, an optical line-side packet processing (optical line packet, OLPKT) module, a customer exchange (customer exchange, CXC) module, and an OTN lite line node (OTN Lite Line Node, OLLN). The QM is configured to implement functions such as multi-queue management and data backpressure processing. The OLPKT is configured to transcode the to-be-sent data into a 256/257B format, and divide the data into OSU fixed-length cells (OSU frames). The CXC module is configured to perform ingress channel and egress channel mapping on the OSU frames. The OLLN module is configured to complete OTN maintenance signal insertion, parsing, and the like.

For example, the OTN chip divides the to-be-sent data into a plurality of data units whose sizes each are 192 B, maps one data unit to a payload area of one OSU frame, and maps a plurality of OSU frames to the OTN frame after the plurality of data units are all mapped to payload areas of the OSU frames. For a format of the OTN frame, refer to content in Table 2. Details are not described herein again.

In an optional implementation, the data communication method provided in this embodiment of this application further includes: The OTN chip determines whether a data flow rate of the QM 1 is greater than or equal to a specified rate threshold. If the data flow rate is greater than or equal to the specified rate threshold, the OTN chip indicates the DPU to reduce a data flow rate of writing data into the QM 1. The data flow rate is an amount of data written by the DPU into the QM 1 in unit time.

It should be noted that the foregoing specified rate threshold may be set based on hardware features of the OTN chip and the DPU. In some optional cases, the specified rate threshold may alternatively be set by a user based on a requirement for data communication between different DCs. This is not limited in this application. For example, the rate threshold may be 5 GB/s, 500 MB/s, or another value.

When an expected data processing speed of the OTN chip is excessively high, for example, a data flow rate of the OTN chip is greater than or equal to a specified rate threshold, the OTN chip may indicate the DPU to reduce the data flow rate of writing the data into the first queue, so that an amount of data to be processed (for example, encapsulated) by the OTN chip in the unit time is reduced, to reduce communication load of the OTN chip. This helps avoid a network packet loss of the OTN chip, and improves communication performance of the optical communication network.

Step 6: The optical transceiver 24 sends, through the channel 1, an OTN frame corresponding to the to-be-sent data to a target storage device.

For example, the target storage device and a source storage device may be storage devices located in different DCs. For example, the target storage device is the storage device 122 shown in FIG. 1, and the source storage device may be the storage device 121 shown in FIG. 1. The OTN frame may be transmitted between the two storage devices through a long-distance optical fiber.

In this embodiment of this application, the target storage device is also referred to as a peer storage device (peer for short) of the source storage device.

Step 7: A peer OTN chip in the target storage device parses the received OTN frame, and writes the to-be-sent data into a buffer of a peer network adapter.

For example, after the peer OTN chip receives the data frame (OTN frame), the OLLN module parses out an OTN maintenance signal, and determines whether the OTN frame has an alarm. When there is no alarm, the CXC module performs OTN channel demapping on the data, parses out RDMA data (the to-be-sent data), and then writes the RDMA data (to-be-sent data) to a QM queue maintained by the buffer of the peer network adapter.

Step 8: A peer DPU obtains the received data from the QM queue, and directly stores the data in a peer memory (such as an internal memory or a hard disk) of the target storage device.

Step 9: After the peer DPU writes the to-be-sent data into the peer memory, the peer OTN chip sends a data write response to a network adapter of the source storage device through the optical transceiver.

For example, the data write response may be transmitted in a format of an OTN frame, and the data write response indicates that the to-be-sent data has been written into the memory of the target storage device.

Step 10: After receiving the data write response, a DPU of the source storage device learns that current data transmission is completed, generates transmission completion queue information CQ 1, places the CQ 1 in a CQ queue, and then notifies the RDMA application that the current data transmission is completed.

A mapping relationship between an RDMA queue in the storage device and the OTN channel provided by the optical transceiver may be established, so that data of different RDMA queues is transmitted through different OTN channels. The mapping relationship is established by the network adapter based on a WQE of data recorded in the RDMA queue. This prevents the optical transceiver from sending an OTN frame corresponding to the data to an OTN channel that does not match the WQE of the data, and improves data communication accuracy.

In addition, in a subsequent communication process of other data, if the network adapter has established a mapping relationship between a WQE of the other data and the first OTN channel, the network adapter may reuse the mapping relationship, to transmit, through the first OTN channel, an OTN frame to which the other data is mapped. This further improves data communication efficiency in the optical communication network.

The method steps in embodiments may be implemented in a hardware manner, or may be implemented by executing software instructions by a processor. The software instructions may include a corresponding software module. The software module may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a computing device. Certainly, the processor and the storage medium may alternatively exist as discrete components in a network device or a terminal device.

This application further provides a chip system. The chip system includes a processor, configured to implement a function of the data processing unit in the foregoing method. In a possible design, the chip system further includes a memory, configured to store program instructions and/or data. The chip system may include a chip, or may include a chip and another discrete component.

All or some of the foregoing embodiments may be implemented by using software, hardware, firmware, or any combination thereof. When the software is used to implement the embodiments, all or some of the embodiments may be implemented in a form of a computer program product. The computer program product includes one or more computer programs or instructions. When the computer programs or instructions are loaded and executed on a computer, all or some of the processes or functions in embodiments of this application are performed. The computer may be a general-purpose computer, a dedicated computer, a computer network, a network device, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium that can be accessed by the computer, or a data storage device, such as a server or a data center, integrating one or more usable media. The usable medium may be a magnetic medium, for example, a floppy disk, a hard disk, or a magnetic tape, may be an optical medium, for example, a digital video disc (digital video disc, DVD), or may be a semiconductor medium, for example, a solid-state drive (solid-state drive, SSD).

The foregoing descriptions are merely specific embodiments of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

## Claims

1. A storage device, comprising a processor, a memory, and a network adapter, wherein the network adapter comprises a data processing chip, a storage medium, and an optical transceiver;
the memory is configured to store to-be-sent data written by the processor;
the data processing chip is configured to write the to-be-sent data from the memory into the storage medium;
the data processing chip is further configured to: read the to-be-sent data in the storage medium, and map the to-be-sent data to a payload area of an optical transport network OTN frame generated by the data processing chip; and
the optical transceiver is configured to send the OTN frame.

2. The storage device according to claim 1, wherein
the memory is further configured to maintain at least one remote direct memory access RDMA send queue, wherein the at least one RDMA send queue comprises a first send queue, the first send queue stores a work queue element WQE of one or more pieces of data, and the one or more pieces of data comprise the to-be-sent data;
the optical transceiver is further configured to provide a plurality of OTN channels, wherein one OTN channel is used to transmit data corresponding to one RDMA send queue; and
the data processing chip is further configured to: read a WQE of the to-be-sent data from the first send queue, and establish a mapping relationship between the WQE and a first OTN channel in the plurality of OTN channels, wherein the mapping relationship indicates that the to-be-sent data can be transmitted through the first OTN channel.

3. The storage device according to claim 2, wherein the data processing chip comprises a first chip and a second chip;
the first chip is configured to read the WQE of the to-be-sent data from the first send queue;
the first chip is further configured to write the to-be-sent data from the memory into the storage medium based on a source address indicated by the WQE;
the second chip is configured to establish the mapping relationship between the WQE and the first OTN channel in the plurality of OTN channels; and
the second chip is further configured to: read the to-be-sent data in the storage medium, and map the to-be-sent data to a payload area of an OTN frame generated by the second chip.

4. The storage device according to claim 3, wherein the storage medium maintains a plurality of queues;
the first chip is specifically configured to write the to-be-sent data from the memory into storage space corresponding to a first queue in the plurality of queues based on the source address indicated by the WQE; and
the second chip is specifically configured to establish the mapping relationship between the first queue and the first OTN channel.

5. The storage device according to claim 4, wherein
the second chip is further configured to determine whether a data flow rate of the first queue is greater than or equal to a specified rate threshold, wherein the data flow rate is an amount of data written by the first chip into the first queue in unit time; and
if the data flow rate is greater than or equal to the specified rate threshold, the second chip is further configured to indicate the first chip to reduce a data flow rate of writing data into the first queue.

6. The storage device according to any one of claims 3 to 5, wherein
the second chip is specifically configured to: map the to-be-sent data to a plurality of optical service unit OSU frames, wherein the to-be-sent data is carried in payload areas of the plurality of OSU frames; and map the plurality of OSU frames to the OTN frame.

7. The storage device according to any one of claims 1 to 6, wherein
the processor is configured to obtain a data access request, wherein the data access request is used to request the to-be-sent data;
the processor is further configured to determine whether a data amount of the to-be-sent data is greater than or equal to a specified threshold; and
the data processing chip is specifically configured to write the to-be-sent data from the memory into the storage medium if the data amount of the to-be-sent data is greater than or equal to the specified threshold.

8. The storage device according to any one of claims 1 to 6, wherein
the optical transceiver is further configured to receive a data write response of a target storage device, wherein the data write response indicates that the to-be-sent data has been written into the target storage device.

9. A data communication method, wherein the method is performed by a storage device, the storage device comprises a processor, a memory, and a network adapter, the memory is configured to store to-be-sent data written by the processor, and the network adapter comprises a data processing chip, a storage medium, and an optical transceiver; and
the method comprises:
writing, by the data processing chip, the to-be-sent data from the memory into the storage medium;
reading, by the data processing chip, the to-be-sent data in the storage medium, and mapping the to-be-sent data to a payload area of an optical transport network OTN frame generated by the data processing chip; and
sending, by the optical transceiver, the OTN frame.

10. The method according to claim 9, wherein the memory is further configured to maintain at least one remote direct memory access RDMA send queue, the at least one RDMA send queue comprises a first send queue, the first send queue stores a work queue element WQE of one or more pieces of data, and the one or more pieces of data comprise the to-be-sent data;
the optical transceiver is configured to provide a plurality of OTN channels, wherein one OTN channel is used to transmit data corresponding to one RDMA send queue;
the reading, by the data processing chip, the to-be-sent data in the storage medium comprises:
reading, by the data processing chip, a WQE of the to-be-sent data from the first send queue, and writing the to-be-sent data from the memory into the storage medium based on a source address indicated by the WQE; and
before the sending, by the optical transceiver, the OTN frame, the method further comprises:
establishing, by the data processing chip, a mapping relationship between the WQE and a first OTN channel in the plurality of OTN channels, wherein the mapping relationship indicates that the to-be-sent data can be transmitted through the first OTN channel.

11. The method according to claim 10, wherein the data processing chip comprises a first chip and a second chip;
the reading, by the data processing chip, a WQE of the to-be-sent data from the first send queue, and writing the to-be-sent data from the memory into the storage medium based on a source address indicated by the WQE comprises:
reading, by the first chip, the WQE of the to-be-sent data from the first send queue, and writing the to-be-sent data from the memory into the storage medium based on the source address indicated by the WQE;
the establishing, by the data processing chip, a mapping relationship between the WQE and a first OTN channel in the plurality of OTN channels comprises:
establishing, by the second chip, the mapping relationship between the WQE and the first OTN channel in the plurality of OTN channels; and
the mapping, by the data processing chip, the to-be-sent data to a payload area of an OTN frame generated by the data processing chip comprises:
reading, by the second chip, the to-be-sent data in the storage medium, and mapping the to-be-sent data to a payload area of an OTN frame generated by the second chip.

12. The method according to claim 11, wherein the storage medium maintains a plurality of queues, the plurality of queues comprise a first queue, and storage space corresponding to the first queue is used to store the to-be-sent data;
the establishing, by the second chip, the mapping relationship between the WQE and the first OTN channel in the plurality of OTN channels comprises:
establishing, by the second chip, the mapping relationship between the first queue and the first OTN channel.

13. The method according to claim 12, wherein the method further comprises:
determining, by the second chip, whether a data flow rate of the first queue is greater than or equal to a specified rate threshold, wherein the data flow rate is an amount of data written by the first chip into the first queue in unit time; and
if the data flow rate is greater than or equal to the specified rate threshold, indicating, by the second chip, the first chip to reduce a data flow rate of writing data into the first queue.

14. The method according to claim 11 or 12, wherein
the mapping, by the data processing chip, the to-be-sent data to a payload area of an OTN frame generated by the data processing chip comprises:
mapping, by the second chip, the to-be-sent data to a plurality of optical service unit OSU frames, wherein the to-be-sent data is carried in payload areas of the plurality of OSU frames; and
mapping, by the second chip, the plurality of OSU frames to the OTN frame.

15. The method according to any one of claims 9 to 14, wherein before the writing, by the data processing chip, the to-be-sent data from the memory into the storage medium, the method further comprises:
obtaining, by the processor, a data access request, wherein the data access request is used to request the to-be-sent data;
determining, by the processor, whether a data amount of the to-be-sent data is greater than or equal to a specified threshold; and
writing, by the data processing chip, the to-be-sent data from the memory into the storage medium if the data amount of the to-be-sent data is greater than or equal to the specified threshold.

16. The method according to any one of claims 9 to 15, wherein the method further comprises:
receiving, by the optical transceiver, a data write response of a target storage device, wherein the data write response indicates that the to-be-sent data has been written into the target storage device.

17. An optical communication system, comprising a storage device and an optical network device, wherein
the storage device comprises a processor, a memory, and a network adapter, and the network adapter comprises a data processing chip, a storage medium, and an optical transceiver;
the memory is configured to store to-be-sent data written by the processor;
the data processing chip is configured to write the to-be-sent data from the memory into the storage medium;
the data processing chip is further configured to: read the to-be-sent data in the storage medium, and map the to-be-sent data to a payload area of an OTN frame generated by the data processing chip; and
the optical transceiver is configured to send the OTN frame to the optical network device.

18. A computer-readable storage medium, comprising computer software instructions, wherein when the computer software instructions are run in a storage device, the storage device performs the method according to any one of claims 9 to 16.

19. A computer program product, wherein when the computer program product runs in a storage device, the storage device performs the method according to any one of claims 9 to 16.
